# EUROPEAN PATENT APPLICATION

(11) **EP 0 902 561 A2**
(43) Date of publication of application: **17.03.1999**
(21) Application number: 98116963.4
(22) Date of filing: 08.09.1998
(51) Int. Cl.: H04B 10/207

(54) **Band control circuit**

(30) Priority: 09.09.1997 JP 243579/97
(71) Applicant: NEC CORPORATION, Tokyo (JP)
(72) Inventor: Nankaku, Nagahiko, Minato-ku, Tokyo (JP)
(74) Representative: VOSSIUS & PARTNER

(57) **Abstract**

A band control circuit for a communication system in which a plurality of subscriber devices including a first subscriber device are connected to a station device via an optical fiber and a star coupler includes a cell length detecting circuit, a determining circuit, and a control circuit. The cell length detecting circuit detects a data length added to a reverse link packet signal sent from the first subscriber device to the station device. The data length is information about the total length of data successively received in units of frames. The determining circuit determines whether the data length detected by the cell length detecting circuit is shorter than the length of data assembled in a packet signal in a first frame. The control circuit outputs a command signal added to a forward link packet signal to be transmitted to all the subscriber devices via the star coupler when the data length is longer than the length of data assembled in the packet signal in the first frame. The command signal instructs the first subscriber device to successively transmit reverse link packet signals preferentially using a successive second frame.

## Description

The present invention relates to a band control circuit used in a subscriber communication system using an optical fiber and, more particularly to, a band control circuit suitable for packet communication.

In a conventional subscriber communication system, speech conversations are mainly transmitted. This is realized by low-speed services by connecting a telephone station to each home telephone set via a metallic line. In recent years, with the spread of facsimile apparatuses and Internet, demands arise for higher-speed services, and a fiber-optic subscriber communication system which can implement efficient, high-speed transmission by connecting the telephone station to each home telephone set via an optical fiber is introduced.

As a transmission method of the communication system, a passive double star transmission method is adopted. To provide low-speed services such as telephone communication in this fiber-optic subscriber communication system, a transmission apparatus using an STM (Synchronous Transfer Mode) passive double star transmission method using an optical fiber as a cable is put into practical use.

In the conventional passive double star transmission method, the transmission band is fixedly assigned between a base device and a subscriber device.

In the conventional passive double star transmission method, since packet communication is performed using the fixed band, the fixed band assigned is not used during a time period in which no communication is performed, and packet communication cannot be efficiently performed.

In transmitting data whose packet length is variable, one packet may not be transmitted at once to the fixed band. When packet transmission is supported using the fixed band, the packet is transmitted in smaller units. In this case, the received packets must be assembled into one perfect packet, which complicates the circuit arrangement.

It is an object of the present invention to provide a band control circuit capable of efficiently performing packet communication by the passive double star transmission method.

In order to achieve the above object, according to the present invention, there is provided a band control circuit for a communication system in which a plurality of subscriber devices including a first subscriber device are connected to a station device via an optical fiber and a star coupler, comprising data length detecting means for detecting a data length added to a reverse link packet signal sent from the first subscriber device to the station device, the data length being information about a total length of data successively received in units of frames, determining means for determining whether the data length detected by the data length detecting means is shorter than a length of data assembled in a packet signal in a first frame, and control means for outputting a command signal added to a forward link packet signal to be transmitted to all the subscriber devices via the star coupler when the data length is longer than the length of data assembled in the packet signal in the first frame, the command signal instructing the first subscriber device to successively transmit reverse link packet signals preferentially using a successive second frame.
Fig. 1 is a block diagram showing the schematic arrangement of a fiber-optic subscriber communication system according to an embodiment of the present invention;
Figs. 2A to 2C are views showing the frame format of a transmission signal to be transmitted from a station device to a subscriber device in the system shown in Fig. 1;
Figs. 3A to 3C are views showing the frame format of a reception signal to be received by the station device in the system shown in Fig. 1; and
Figs. 4A and 4B are views showing the frame format of a reception signal to be received by the station device when one subscriber device successively transmits packet signals.

The present invention will be described in detail below with reference to the accompanying drawings.

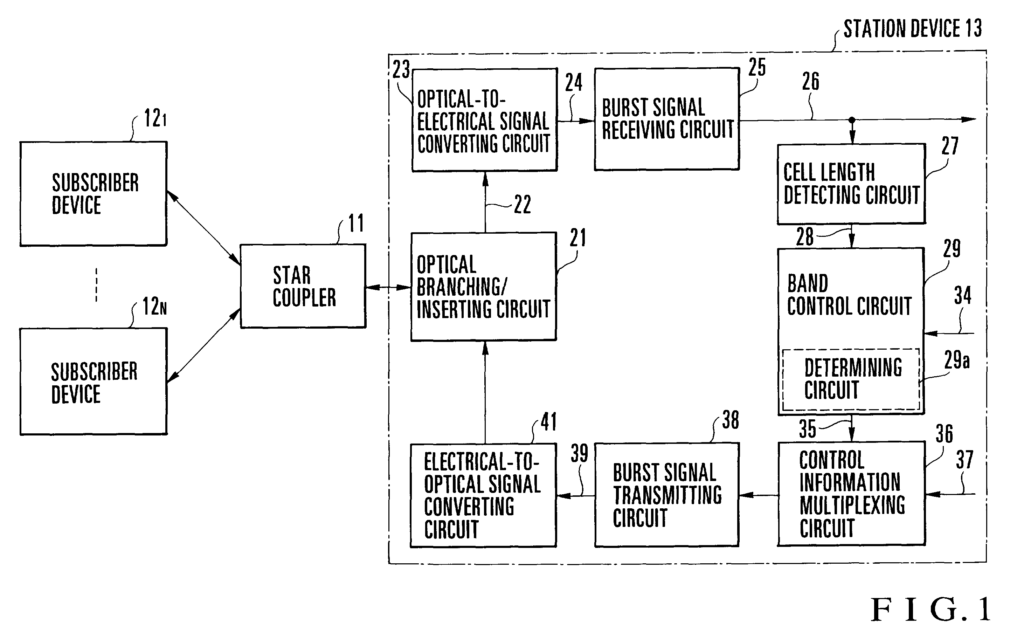

Fig. 1 shows the schematic arrangement of a fiber-optic subscriber communication system according to an embodiment of the present invention. The fiber-optic subscriber communication system of this embodiment is constituted by a star coupler 11, a plurality of subscriber devices 12₁,..., 12_{N} connected to the star coupler 11, and a station device 13 connected to the subscriber devices 12₁,..., 12_{N} via the star coupler 11.

The station device 13 comprises an optical branching/inserting circuit 21 connected to the star coupler 11 via a transmission path. An optical signal 22 separated by the optical branching/inserting circuit 21 is photoelectrically converted into an electrical signal 24 by an optical-to-electrical signal converting circuit 23. The electrical signal 24 output from the electrical signal converting circuit 23 is terminated by a burst signal receiving circuit 25 to extract a reception signal 26. The reception signal 26 output from the burst signal receiving circuit 25 is branched and input to a cell length detecting circuit 27. The cell length detecting circuit 27 detects the packet length of the reception packet signal 26. A detection result 28 output from the cell length detecting circuit 27 is input to a band control circuit 29 having a determining circuit 29a.

The band control circuit 29 controls the band for each subscriber so as not to divide packet signals transmitted from the subscriber devices 12₁,..., 12_{N} to the station device 13. That is, the band control circuit 29 controls the transmission band in the passive double star transmission method in units of frames by using the detection result 28 of the cell length detecting circuit 27 and a band setting signal 34. The band setting signal 34 is used to designate in advance bands (fixed communication areas) respectively assigned to the subscriber devices 12₁,..., 12_{N} and a packet communication band.

The band control circuit 29 controls slot assignment on the basis of the results of detecting, by the cell length detecting circuit 27, data lengths added to reverse link packet signals, i.e., packet signals transmitted from the subscriber devices 12₁,..., 12_{N} to the station device 13. More specifically, the determining circuit 29a determines whether the data length is equal to or shorter than the length of data which can be assembled in a one-frame packet signal.

If the determination results indicate that the data length exceeds the length of data which can be assembled in a one-frame packet signal, the band control circuit 29 assigns a corresponding slot so as to successively transmit a subsequent packet signal in the next frame. The band control circuit 29 therefore outputs, to a control information multiplexing circuit 36, a command signal 35 for exclusively assigning slots for a period required to divisionally transmit data having a necessary data length in successive frames.

Transmission data 37 to be transmitted to the subscriber devices 12₁,..., 12_{N} is input to the control information multiplexing circuit 36 in units of cells, and multiplexed on the command signal 35 output from the band control circuit 29. An output from the control information multiplexing circuit 36 is packeted by a burst signal transmitting circuit 38, and the packet signal is output as a transmission signal 39. The transmission signal 39 output from the burst signal transmitting circuit 38 is converted from an electrical signal into an optical signal by an electrical-to-optical signal converting circuit 41.

The optical signal output from the electrical-to-optical signal converting circuit 41 is sent to the star coupler 11 via the optical branching/inserting circuit 21, and transmitted from the star coupler 11 to the subscriber devices 12₁,..., 12_{N}. The subscriber devices 12₁,..., 12_{N} control transmission of packet signals in units of frames in accordance with the command contents of the multiplexed command signal 35. As a result, a specific subscriber can exclusively use slots for a necessary period, as described above.

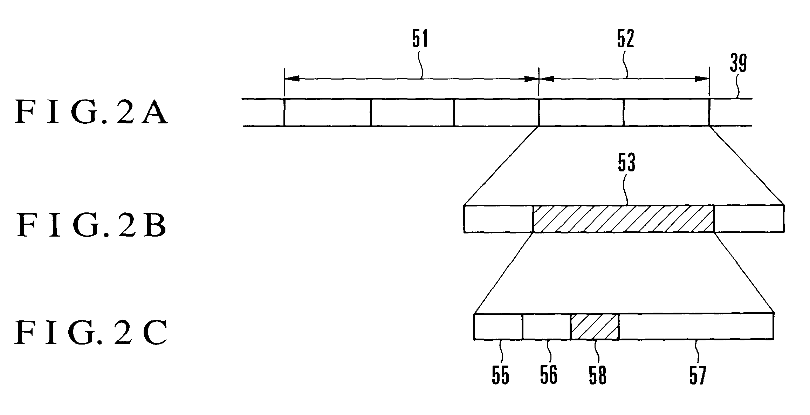

Figs. 2A to 2C show the frame format of a transmission signal (forward link signal) to be transmitted from the station device 13 to the subscriber devices 12₁,..., 12_{N}. As shown in Fig. 2A, the transmission signal 39 is made up of a fixed communication area 51 as a band assigned to each of the subscriber devices 12₁,..., 12_{N}, and a packet communication area 52 commonly used by the subscriber devices 12₁,..., 12_{N}. In the packet communication area 52, a forward link packet signal 53 is assembled, as shown in Fig. 2B.

As shown in Fig. 2C, the forward link packet signal 53 is made up of a transmission destination address 55, a transmission source address 56, transmission data 57, and information 58 representing the length of the transmission data 57. The subscriber devices 12₁,..., 12_{N} check the transmission destination address 55 of the forward link packet signal 53, and when the transmission destination address 55 coincides with the self addresses, receive the transmission data 57. The command signal 35 multiplexed by the control information multiplexing circuit 36 is transmitted to the subscriber devices 12₁,..., 12_{N} while being assembled in a predetermined frame portion.

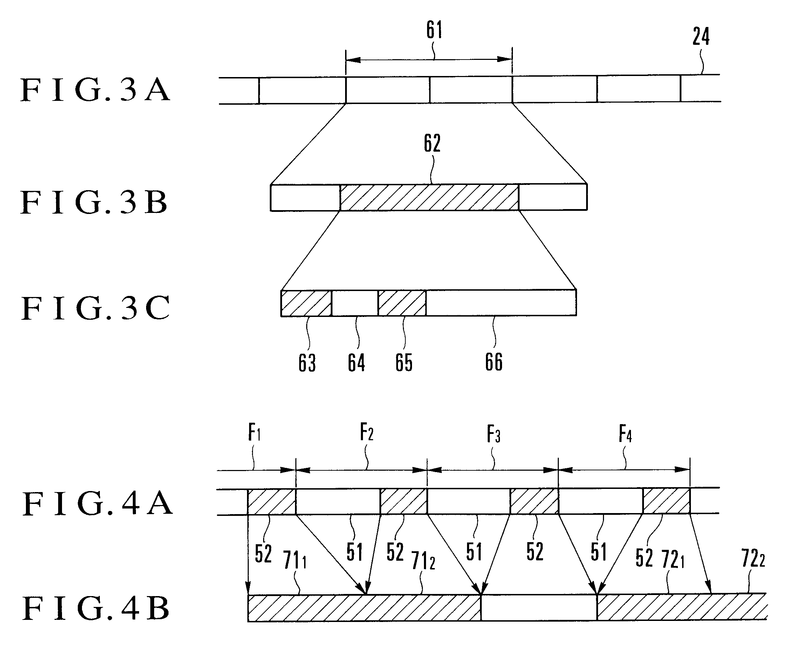

Figs. 3A to 3C show the frame format of a reception signal (reverse link signal) to be received by the station device 13. As shown in Fig. 3A, the reception signal 24 has a packet communication area 61, similar to the reverse link signal. In the packet communication area 61, a reverse link packet signal 62 is assembled, as shown in Fig. 3B. As shown in Fig. 3C, the reverse link packet signal 62 is made up of a transmission destination address 63, a transmission source address 64, a data length 65, and reception data 66 assembled in the reverse link packet signal 62.

The packet signal 62 transmitted using the packet communication area 61 has a variable length within this area. If the data length 65 is short, the value of the data length 65 is equal to the length of the reception data 66 assembled in the packet signal 62. In this case, the band control circuit 29 need not exclusively assign corresponding slots of the next frame to a corresponding subscriber device.

If the value of the data length 65 of the packet signal 62 received by the station device 13 is larger than the length of the reception data 66 assembled in the packet signal 62, the band control circuit 29 sends the command signal 35 to the subscriber devices 12₁,..., 12_{N} so as to allow a corresponding subscriber device to transmit the packet signal 62 even in the next frame within the band range set by the band setting signal 34, i.e., a maximum number of slots usable in units of frames, which is set in the subscriber devices 12₁,..., 12_{N}. Note that the start and end positions of the packet signal 62 in each frame can be determined by detecting a data string made up of a predetermined number of bits.

Figs. 4A and 4B show the frame format of a reception signal to be received by the station device 13 when one subscriber device successively transmits packet signals. Fig. 4A shows the frame format of a signal received by the burst signal receiving circuit 25. As described above, the fixed communication area 51 and the packet communication area 52 are prepared for each of frames F₁ to F₄. The first subscriber device 12₁ exclusively uses packet communication areas 52 in the former two frames F₁ and F₂. The second subscriber device 12₂ exclusively uses packet communication areas 52 in the latter two frames F₃ and F₄.

As shown in Fig. 4B, therefore, the station device 13 can successively obtain reception signals 71₁ and 71₂ from the first subscriber device 12₁. Similarly, the station device 13 can successively obtain reception signals 71₁ and 71₂ from the second subscriber device 12₂. Since no packet signal from another subscriber device is mixed in an intermediate frame slot, packets need not be assembled again. Therefore, the circuit arrangement of the station device 13 can be simplified.

As has been described above, according to the present invention, the station device can use a forward link packet signal to perform assignment of a packet signal transmitted from each subscriber device. Accordingly, the station device can perform efficient communication such that transmission of packet signals concentrated depending on time periods is distributed in units of subscriber devices, or transmission of a reverse link packet signal is controlled in accordance with the significance of a subscriber device or the significance of a packet signal itself.

The station device can receive packet signals successively sent from each subscriber device to the same slot position in units of frames without reconstructing the signals. This simplifies the circuit arrangement.

Since the maximum number of slots usable in units of frames is set for each subscriber device, the packet communication area can be used between a plurality of subscriber devices with a good balance. Further, the priority of packet communication can be set between subscriber devices.

Since a reverse link packet signal is a variable-length packet signal, even a fixed packet communication area can be effectively assigned to a plurality of subscriber devices.

## Claims

1. A band control circuit for a communication system in which a plurality of subscriber devices (12₁ -12_{N}) including a first subscriber device are connected to a station device (13) via an optical fiber and a star coupler (11), characterized by comprising:
data length detecting means (27) for detecting a data length added to a reverse link packet signal sent from the first subscriber device to the station device, the data length being information about a total length of data successively received in units of frames;
determining means (29a) for determining whether the data length detected by said data length detecting means is shorter than a length of data assembled in a packet signal in a first frame; and
control means (29) for outputting a command signal added to a forward link packet signal to be transmitted to all the subscriber devices via the star coupler when the data length is longer than the length of data assembled in the packet signal in the first frame, the command signal instructing the first subscriber device to successively transmit reverse link packet signals preferentially using a successive second frame.

2. A circuit according to claim 1, wherein a maximum number of slots successively usable in units of frames is set for each subscriber device, and
said band control means successively assigns slots to the first subscriber device in units of frames using, as a limit, the number of slots set in the first subscriber device.

3. A circuit according to claim 1 or 2, wherein the reverse link packet signal is a variable-length packet signal.

4. A circuit according to claim 1, 2 or 3, further comprising:
signal multiplexing means (36) for multiplexing the command signal output from said control means on transmission data; and
transmitting means (38) for packeting the transmission data multiplexed on the command signal and transmitting the packet signal to the subscriber device via the star coupler.

5. A circuit according to claim 4, wherein the subscriber device transmits reverse link packet signals using assigned slots successive in units of frames on the basis of the command signal multiplexed on the transmission data from said transmitting means.
